# FASCICULE DE BREVET EUROPEEN

(11) **EP 0 427 576 B1**
(45) Date de publication et mention de la délivrance du brevet: **04.01.1995**
(21) Numéro de dépôt: 90402724.0
(22) Date de dépôt: 02.10.1990
(51) Int. Cl.: H04N 7/00

(54) **Interpolateur pour un système de transmission à sous-échantillonnage**
Interpolator für ein Übertragungssystem mit Unterabtastung
Interpolator for a sub-sampling transmission system

(30) Priorité: 06.10.1989 FR 8913087
(43) Date de publication de la demande: 15.05.1991
(73) Titulaire: LABORATOIRE EUROPEEN DE RECHERCHES ELECTRONIQUES AVANCEES, 92400 Courbevoie (FR)
(72) Inventeur: Weisser, Martin, F-92045 Paris la Défense (FR); Moraillon, Jean-Yves, F-92045 Paris la Défense (FR)
(74) Mandataire: Ruellan-Lemonnier, Brigitte

(56) Documents cités:
- EP-A- 0 249 962
- EP-A- 0 266 079
- IEEE TRANSACTIONS ON CIRCUITS AND SYSTEMS, vol. CAS-34, no. 11, novembre 1987, pages 1432-1439, IEEE, New York, US; G. SCHAMEL: "Pre- and postfiltering of HDTV signals for sampling rate reduction and display up-conversion"
- SYMPOSIUM RECORD BROADCAST SESSIONS 16TH INTERNATIONAL TV SYMPOSIUM, Montreux, 17 - 22 Juin 1989, pages 37-52; F.W.P. VREESWIJK et al.: "HDMAC coding for compatible broadcasting of high definition television signals"

## Description

L'invention se rapporte principalement à un interpolateur pour téléviseur et à un téléviseur comportant un tel interpolateur.

Pour améliorer la qualité de l'image en télévision, on est amené à augmenter le nombre d'informations affiché sur les écrans. Dans la mesure où les canaux de transmission ont des capacités limitées, on transmet dans le canal de transmission une quantité d'informations moindre, et l'on reconstitue l'information manquante. Une des techniques de reconstitution utilise des interpolateurs. Un tel interpolateur est destiné à reconstituer un élément d'image (pixel en terminologie anglo-saxonne) à partir d'une pluralité d'autres. Habituellement, on utilise des pixels précédents et suivant et/ou situés sur des lignes supérieures et inférieures.

La présente invention concerne des interpolateurs pour téléviseurs minimisant les quantités de matériels mis en oeuvre. L'interpolateur selon la présente invention s'applique notamment à la norem HD-MAC décrite notamment dans "l'onde électrique Juillet-Août 1989, vol. 69 n°4".

L'interpolateur selon la présente invention, est destiné à être réalisé sous forme de un ou plusieurs circuits intégrés ou de faire partie d'un circuit intégré général. Un avantage important de l'interpolateur selon la présente invention est de réduire le nombre d'éléments occupant une grande surface de silicium (ou d'autres semiconducteurs) dans un circuit intégré comme par exemple les lignes à retard.

L'invention a principalement pour objet un interpolateur d'éléments d'images de télévision comportant des moyens d'interpolation de blocs d'éléments d'images statiques comportant au moins un filtre médian recevant trois blocs d'éléments d'images retardés les uns par rapport aux autres et un additionneur additionnant l'un des blocs d'éléments d'images entré sur le filtre à un quatrième bloc d'éléments d'images et des moyens d'interpolation de blocs d'éléments d'images en mouvement comportant au moins un filtre médian recevant trois blocs d'éléments d'images retardés les uns par rapport aux autres et un additionneur additionnant l'un des blocs d'éléments d'images entré sur le filtre à un quatrième bloc d'éléments d'images, caractérisé en ce que les quatre éléments d'images envoyés respectivement sur chaque filtre médian et chaque additionneur issus de quatre multiplexeurs, les entrées impaires des quatre multiplexeurs du moyen d'interpolation en mouvement reçevant les trames impaires des images de télévision et étant connectées à un premier circuit à retard relié à une première entrée de blocs d'éléments d'images et délivrant cinq sorties retardées de manière spécifique et les entrées paires des quatre mulitplexeurs du moyen d'interpolation en mouvement reçevant les trames paires des images de télévision et étant connectées à un second circuit à retard relié à une seconde entrée de blocs d'éléments d'images et délivrant cinq sorties retardées de manière spécifique, les entrées impaires des deux premier multiplexeurs du moyen d'interpolation statique étant connectées au deuxième circuit à retard tandis que leurs entrées paires sont connectées au premier circuit à retard et les entrées impaires des deux second multiplexeurs du moyen d'interpolation statique étant connectées au premier circuit à retard tandis que leurs entrées paires sont connectées au second circuit à retard.

L'invention a aussi pour objet un récepteur de télévision du type comportant au moins un décodeur, un circuit de débrassage, un convertisseur de structure de sous-échantillonnage et un circuit d'interpolation permettant de traiter des blocs d'éléments d'images statiques et des blocs d'éléments d'images en mouvement.

L'invention a aussi pour objet un récepteur de télévision caractérisé par le fait que les blocs ont une dimension de 16 éléments d'images par 16 éléments d'images.

L'invention sera mieux comprise au moyen de la description ci-après et des figures annexées données comme des exemples non limitatifs parmi lesquels :
- la figure 1 comporte trois tableaux expliquant les trois voies mises en oeuvre dans la norme HD-MAC ;
- la figure 2 est un tableau plus étendu concernant la voie 20ms de la norme HD-MAC ;
- la figure 3 est un schéma illustrant l'ordre dans lequel les échantillons sont transmis ;
- la figure 4 est un schéma général de récepteur de télévision de la norme HD-MAC ;
- la figure 5 est un schéma d'un premier exemple de réalisation d'interpolateur selon la présente invention ;
- la figure 6 est un schéma d'un second exemple de réalisation du dispositif selon la présente invention.

Le projet des normes HD-MAC de télévision haute définition doit être compatible avec le canal de transmission D2 MAC. Un tel canal permet la transmission de 312.5 lignes par période de 20ms avec 864 éléments d'images par ligne. Pour répondre aux normes de haute définition on veut pouvoir afficher 1 250 lignes comportant chacune 1 728 éléments d'images. Pour pouvoir effectuer un tel affichage, on adapte la structure d'échantillonnage et/ou la fréquence d'échantillonnage temporelle des trames.

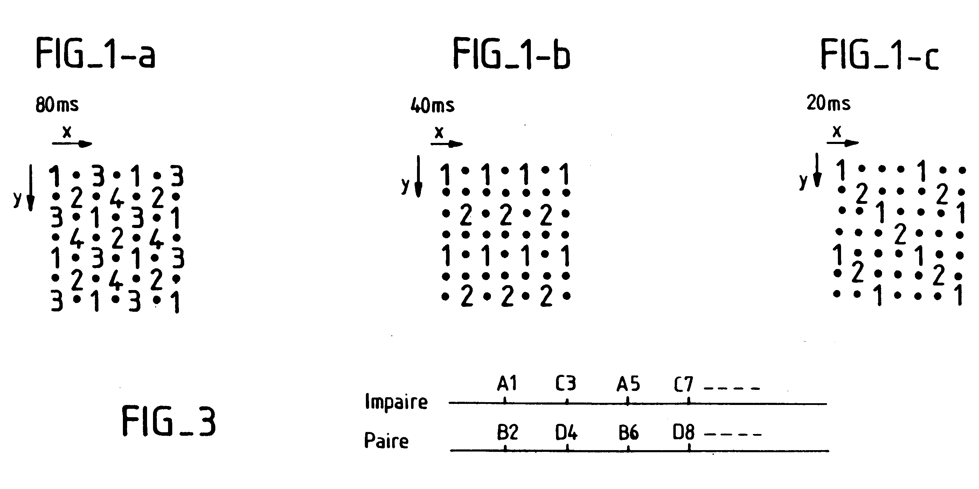

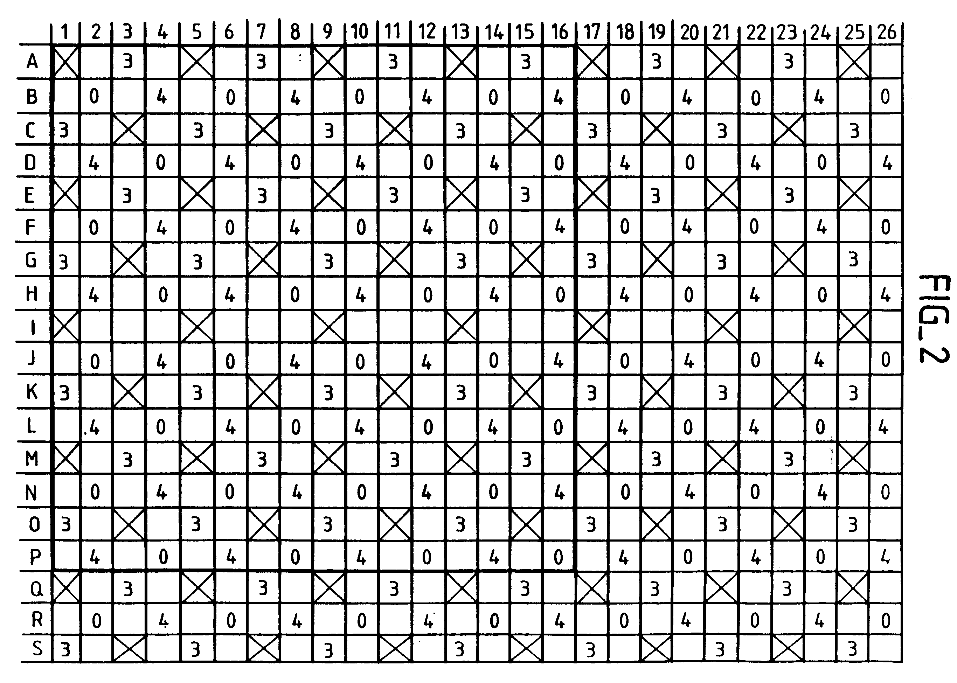

L'image est divisée en blocs de 16*16 éléments d'images. Selon la vitesse de mouvement des éléments affichés dans chaque bloc on choisit un mode de transmission. Le mode 80ms illustré sur la figure 1A est appliqué aux blocs statique.

Le mode 40ms, illustré sur la figure 2B est appliqué aux blocs en mouvement lent.

Le mode 20ms, illustré sur la figure 1C est appliqué aux blocs en mouvement rapide.

Sur la figure 1, les points représentent des éléments d'images non transmis, qui seront reconstitués par interpolation à partir d'éléments d'images transmis. Les chiffres représentent le numéro de la trame qui transmet l'élément d'image.

Dans le mode 80ms, illustré sur la figure 1A les éléments de la première trame sont transmis tous les quatre éléments d'image une ligne sur deux. Les éléments d'image sont placés en quinconce. Entre deux éléments successifs appartenant à la trame n°1 sont placés les éléments appartenant à la trame 3.

Les éléments des trames 2 et 4 sont émis en alternance avec les éléments de trame 1 et 3 décalés d'un élément d'image.

Ainsi, la transmission des quatre trames successives permet la reconstitution d'un bloc statique en haute définition.

Dans un mode 40ms on émet un élément d'image sur 2, une ligne sur 4. Les éléments d'image de la trame 2 sont décalés d'un élément d'image et de deux lignes. Sur le mode 40ms on effectue une compensation de mouvement. Ce mode ne fait pas objet de la présente invention.

En mode 20ms, illustré sur la figure 1C les éléments d'image de la trame 1 sont émis une ligne sur deux tous les quatre éléments d'image. De même, les éléments d'image de trame 2 sont émis toutes les deux lignes un élément d'image sur quatre mais décalés d'un élément d'image. Comme on peut le voir sur les figures 1A et 1C un mode 20ms est un sous-ensemble du mode 80ms dans lequel on n'émettrait point des trames 3 et 4. La similitude des structures des modes 80ms et 20ms permettra son traitement analogue dans le dispositif selon la présente invention. Cela se traduit par la réalisation des interpolateurs du mode 80ms et du mode 20ms ayant des parties communes.

Sur la figure 2, on a représenté sur une figure unique le mode 80ms et le mode 20ms pour des pixels allant de 1 à 26 et pour les lignes allant de A à S. Sur la figure 2, on a utilisé des croix pour représenter les trames 1 et des ronds pour représenter les trames 2 des modes 20ms et 80ms. Pour le mode 20ms ce sont les seules informations transmises. Pour le mode 80ms les informations sont complétées par les troisième et quatrième trames notées 3 et 4 sur la figure 2. Un exemple de bloc est délimité par un trait fort entre le pixel 1 et le pixel 16P.

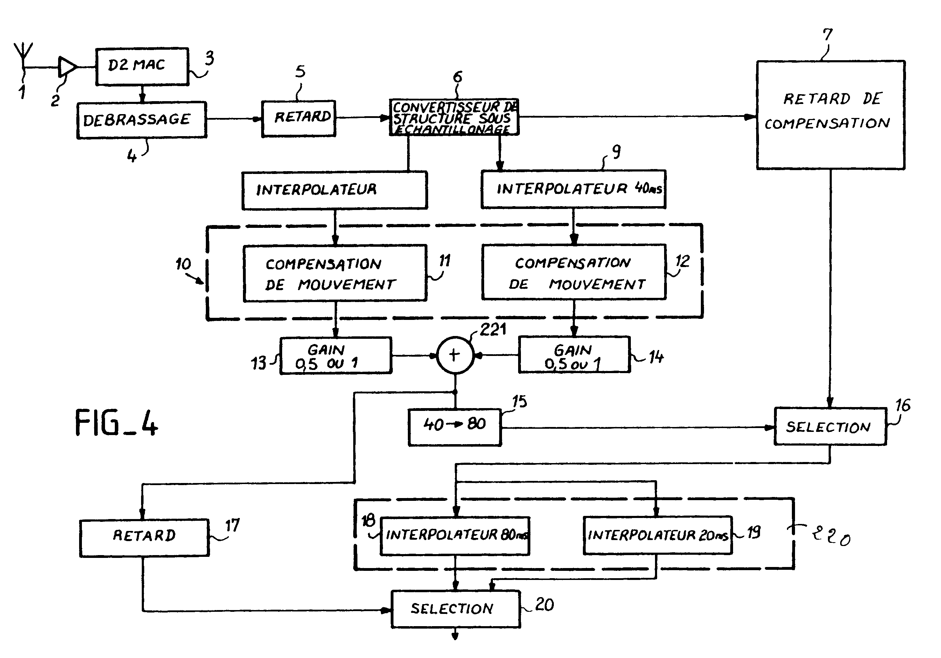

En réalité les points A1,C3,A5 etc appartiennent à la première trame tandis que les éléments d'image B2,D4,B6 etc appartiennent à la seconde trame. Cela veut dire que lors de la transmission effective on transmet l'échantillon d'image tel qu'illustré sur la figure 3 d'abord la ligne impaire A1,C3,A5,C7,... puis la ligne paire B2,D4,B6,D8,... Le débrassage des éléments d'images est effectué par un circuit spécial de débrassage illustré sur la figure 4.

Sur la figure 4, on peut voir un exemple de réalisation d'un récepteur de télévision HD-MAC. Le récepteur est connecté à une source de signal 1 comme par exemple une antenne. L'antenne 1 est connectée à un dispositif d'amplification 2. La sortie du dispositif d'amplification 2 est connectée à l'entrée d'un décodeur D2 MAC 3. La sortie du décodeur D2 MAC 3 est connectée à un dispositif de débrassage 4. La sortie du dispositif de débrassage 4 est connectée à l'entrée d'un dispositif de retard 5. La sortie du dispositif de retard 5 est connectée à l'entrée d'un convertisseur 6. Une première sortie du convertisseur 6 est connectée à l'entrée d'un dispositif de retard de compensation 7. Une deuxième sortie du convertisseur 6 est connectée à l'entrée d'un interpolateur 8. Une troisième sortie du convertisseur 6 est connectée à l'entrée d'un interpolateur 9. Les sorties des interpolateurs 8 et 9 sont connectées à l'entrée d'un dispositif de compensation de mouvement 10. Dans l'exemple illustré sur la figure 4, le dispositif de compensation de mouvement comporte deux éléments de compensation de mouvement 11 et 12. La sortie de l'élément de compensation de mouvement 11 est connectée à un dispositif de gain variable égal à 0,5 ou 1 13. La sortie de l'élément de compensation de mouvement 12 est connectée à l'entrée d'un dispositif à gain variable égal à 0,5 ou 0 14. La sortie de l'élément à gain variable 13 est connectée à une première entrée d'un additionneur 221. La sortie de l'élément à gain variable 14 est connectée à une seconde entrée de l'additionneur 221. La sortie de l'additionneur 221 est connectée à l'entrée d'un dispositif 15 de conversion du mode 40ms en mode 80ms. La sortie du dispositif de conversion 15 est connectée à une première entrée du dispositif de sélection 16 et à l'entrée d'un dispositif de retard 17. La sortie du dispositif du retard de compensation 7 est connectée à une seconde entrée du dispositif de sélection 16. La sortie du dispositif de sélection 16 est connectée à un dispositif d'interpolation 220. Dans l'exemple illustré sur la figure 4, le dispositif d'interpolation 220 est composé d'un interpolateur 80ms 18 et un interpolateur 20ms 19. Les sorties des interpolateurs 18 et 19 sont reliés respectivement à deux entrées d'un dispositif de sélection 20. La sortie du dispositif de retard 17 est reliée à une troisième entrée du dispositif de sélection 20. Le dispositif de sélection 20 délivre un signal numérique à afficher, éventuellement après une conversion et une adaptation sur un dispositif d'affichage non illustré sur la figure 4.

Sur la figure 4, on n'a pas illustré le dispositif d'élaboration des signaux de contrôle ni le dispositif d'élaboration du signal d'horloge.

La source de signal 1 fournit le signal tel qu'illustré sur la figure 3, les signaux de son et les signaux d'assistances comportant des informations concernant le mode de traitement (20ms, 40 ms ou 80ms) appliqué au diners blocs, ainsi que d'éventuels signaux sur la direction et l'amplitude du mouvement destiné au dispositif de compensation de mouvement 10.

L'amplificateur 2 amplifie les signaux reçus.

Le décodeur D2 MAC 3 effectue l'extraction des signaux reçus. Le dispositif de débrassage 4 (deshuffler en terminologie anglo-saxonne) effectue le débrassage des signaux pour obtenir les signaux sous la forme illustrée sur les figures 1 ou 2.

Le dispositif de retard 5 (field delays en terminologie anglo-saxonne) assure la mémorisation des éléments d'images transmis sur les trames précédentes afin de reconstituer les structures d'échantillonnage des différents modes.

Le convertisseur 6 (SSPC ou Soub Sampling patern Converter en terminologie anglo-saxonne) alimente les différentes voies avec des échantillons correspondant à la structure d'échantillonnage appropriée.

Le dispositif de compensation de retard compense les retards introduits par le traitement de la voie 40ms qui est plus long que celui des autres voies.

Les interpolateurs 8 et 9 traitent le mode 40ms. Les interpolateurs 8 et 9 génèrent à partir d'éléments d'image transmis les éléments d'image manquants.

Le dispositif de compensation de mouvement 10 et les dispositifs à gain variable 13 et 14 constituent le traitement du mode 40ms.

L'additionneur 221 effectue la somme des signaux délivrés par les dispositifs 13 et 14.

Le dispositif 15 convertit les signaux du mode 40ms sous la forme de signaux de 80ms.

Selon le type de bloc traité, le dispositif de sélection 16 sélectionne le signal délivré par le dispositif de retard de compensation 7 ou par le dispositif 15.

L'interpolateur 80ms 18 permet de fournir les éléments d'image qui n'ont pas été transmis dans le mode 80ms.

L'interpolateur 19 permet de fournir les éléments d'image n'ayant pas été transmis dans le mode 20ms.

Le dispositif de retard 17 permet de synchroniser les signaux correspondants aux diners blocs pour tenir compte du retard apporté par le dispositif 15,16 et 220 dans le traitement du signal.

Le dispositif de sélection 20 permet de sélectionner les signaux à afficher. Si à l'émission on signale que le bloc traité est du type 40ms il sélectionnera le signal présent à la sortie du dispositif de retard 17 ; s'il est du type 80 ms il sélectionnera le signal présent en sortie de l'interpolateur 18 ; s'il est du type 20ms le dispositif de sélection sélectionnera le signal présent en sortie de l'interpolateur 19.

Le dispositif de télévision de type HD-MAC repose sur le principe que plus le mouvement d'un bloc à l'écran est rapide, moins l'oeil est sensible aux détails que ce bloc contient.

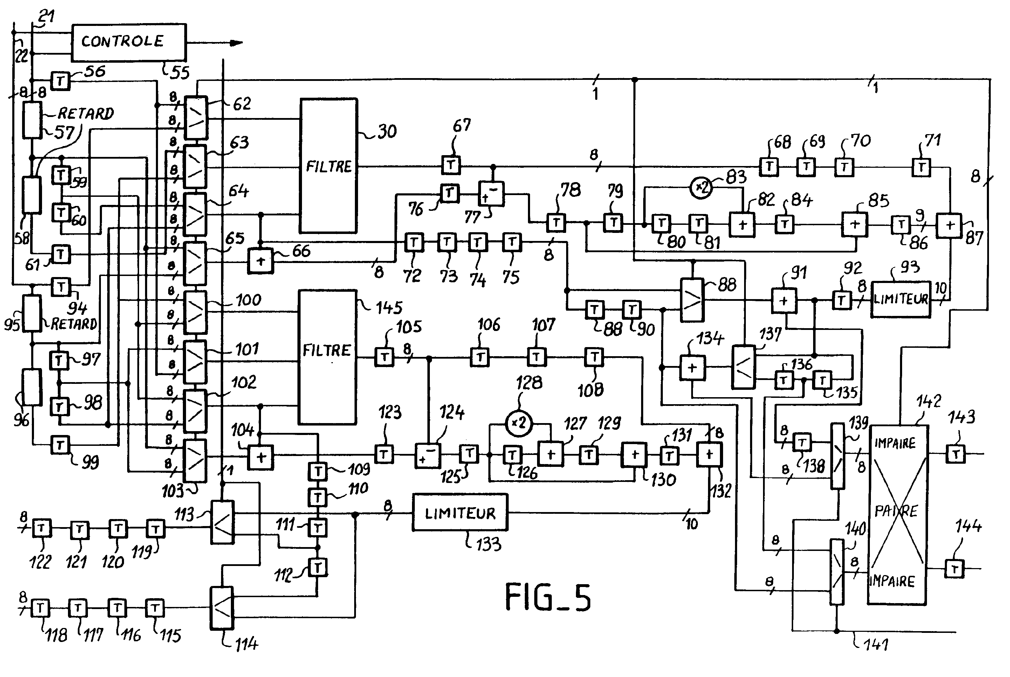

Sur la figure 5, on peut voir un premier exemple de réalisation du dispositif selon la présente invention. L'invention repose sur le fait que la structure des signaux transmis en mode 80ms et 20ms est similaire. Ainsi les interpolateurs 80ms et 20ms utilisent certains éléments d'image commun. La principale originalité du dispositif selon la présente invention réside dans le fait d'utiliser des dispositifs communs pour générer les signaux nécessaires à l'interpolateur 80ms et à l'interpolateur 20ms, notamment les lignes à retard. Toutefois, cela nécessite des dispositifs d'aiguillage des signaux de type multiplexeur. Dans le cas d'une implémentation d'un circuit intégré, le multiplexeur occupe une surface de semiconducteur inférieure à celle des lignes à retard. Ainsi, on réduit la surface des semiconducteurs nécessaires à l'implémentation de la fonction complète consistant en un interpolateur 80ms et un interpolateur 20ms.

L'exemple de réalisation du dispositif illustré sur la figure 5 comporte deux entrées 21,22 de signal ce qui permet de diminuer le débit d'information transmis par chacune des entrées. Les entrées 21,22 sont connectées au dispositif 55 d'élaboration des signaux de contrôle. D'autre part l'entrée 21 est connectée à l'entrée d'une ligne à retard 56 induisant un retard d'un cycle d'horloge, introduisant un retard correspondant à deux éléments d'images ainsi qu'à l'entrée d'une ligne à retard 57 introduisant le retard correspondant à une ligne d'image. La sortie de la ligne à retard 56 est connectée à l'entrée impaire d'un multiplexeur 62 et à l'entrée paire d'un multiplexeur 101. La sortie de la ligne à retard 57 est connectée à l'entrée d'une ligne à retard induisant un retard d'un cycle d'horloge 59, à l'entrée d'une ligne à retard induisant un retard d'une ligne 58, à l'entrée impaire d'un multiplexeur 65, et l'entrée impaire du multiplexeur 103. La sortie de la ligne à retard 59 est connectée à l'entrée d'une ligne à retard 60 induisant un retard d'un cycle d'horloge, à l'entrée paire d'un multiplexeur 100, et à l'entrée impaire d'un multiplexeur 102. La sortie de la ligne à retard 60 est connectée à l'entrée impaire d'un multiplexeur 64. La sortie de la ligne à retard 58 est connectée à l'entrée d'une ligne à retard 61 induisant un retard d'un cycle d'horloge. La sortie de la ligne à retard 61 est connectée à l'entrée impaire d'un multiplexeur 63. L'entrée 22 est connectée à l'entrée d'une ligne à retard 94 induisant un retard d'un cycle d'horloge et à l'entrée d'une ligne à retard 95 induisant un retard d'une ligne. La sortie de la ligne à retard 94 est connectée à l'entrée paire du multiplexeur 62. La sortie de la ligne à retard 95 est connectée à l'entrée d'une ligne à retard 97 induisant un retard d'un cycle d'horloge, à l'entrée paire du multiplexeur 65 et à l'entrée d'une ligne à retard 96 induisant un retard d'une ligne. La sortie de la ligne à retard 97 est connectée à l'entrée impaire du multiplexeur 101 et à l'entrée paire du multiplexeur 103 ainsi qu'à l'entrée d'une ligne à retard 98 induisant un retard d'un cycle d'horloge. La sortie de la ligne à retard 98 est connectée à l'entrée paire du multiplexeur 64 et à l'entrée paire du multiplexeur 102. La sortie de la ligne à retard 96 est connectée à l'entrée d'une ligne à retard 99 induisant un retard d'un cycle d'horloge. La sortie de la ligne à retard 99 est connectée à l'entrée impaire du multiplexeur 100 et à l'entrée paire du multiplexeur 63. Les sorties des multiplexeurs 62 et 63 sont connectées à deux premières entrées d'un filtre 30. La sortie du multiplexeur 64 est connectée à une troisième entrée du filtre 30, l'entrée d'une ligne à retard 72 induisant un retard d'un cycle d'horloge et à une première entrée d'un additionneur 66. La sortie du multiplexeur 65 est connectée à la seconde entrée de l'additionneur 66. L'additionneur 66 additionne la moitié des valeurs présentes à chacune de ces entrées. La sortie du filtre est connectée à l'entrée d'une ligne à retard 67 induisant un retard d'un cycle d'horloge. La sortie de la ligne à retard 67 est connectée à l'entrée moins d'un soustracteur 77 et à l'entrée d'une ligne à retard 68 induisant un retard d'un cycle d'horloge. La sortie de la ligne de retard 68 est connectée à l'entrée d'une ligne à retard 69 induisant un retard d'un cycle d'horloge. La sortie de la ligne à retard 69 est connectée à l'entrée de la ligne à retard 70 induisant un retard d'un cycle d'horloge. La sortie de la ligne à retard 70 est connectée à l'entrée d'une ligne à retard 71 induisant un retard d'un cycle d'horloge. La sortie de la ligne à retard 71 est connectée à une première entrée d'un additionneur 87. La sortie de l'additionneur 66 est connectée à l'entrée d'une ligne à retard 76 induisant un retard d'un cycle d'horloge. La sortie de la ligne à retard 76 est connectée à l'entrée plus du soustracteur 77. La sortie du soustracteur 77 est connectée à l'entrée d'une ligne à retard 78 induisant un retard d'un cycle d'horloge. La sortie de la ligne à retard 78 est connectée à l'entrée d'une ligne à retard 79 induisant un retard d'un cycle d'horloge ainsi qu'à une entrée d'un additionneur 85 effectuant l'addition du quart des valeurs présentes à ces entrées. La sortie de la ligne à retard 79 est connectée à l'entrée d'un multiplieur par deux 83 et à l'entrée d'une ligne à retard 80 induisant un retard d'un cycle d'horloge. La sortie de la ligne à retard 80 est connectée à l'entrée d'une ligne à retard 81 induisant un retard d'un cycle d'horloge. La sortie de la ligne à retard 81 est connectée à une première entrée d'un additionneur 82. La sortie du multiplieur 83 est connectée à une seconde entrée de l'additionneur 82. La sortie de l'additionneur 82 est connectée à l'entrée d'une ligne à 84 induisant un retard d'un cycle d'horloge. La sortie de la ligne à retard 84 est connectée à une seconde entrée de l'additionneur 85. La sortie de l'additionner 85 est connectée à l'entrée d'une ligne à retard 86 induisant un retard d'un cycle d'horloge. La sorte de la ligne à retard 86 est connectée à une seconde entrée de l'additionneur 87. La sortie de la ligne à retard 75 est connectée à l'entrée impaire d'un multiplexeur 88 et à l'entrée d'une ligne à retard 89 induisant un retard d'un cycle d'horloge. La sortie de la ligne retard 89 est reliée à l'entrée d'une ligne à retard 90 induisant un retard d'un cycle d'horloge. La sortie de la ligne à retard 90 est connectée à l'entrée paire du multiplexeur 88, à une première entrée d'un additionneur 134 effectuant la somme de moitié des valeurs présentes à ces entrées, et à l'entrée 1 d'un multiplexeur 140. La sortie du multiplexeur 88 est connectée à une entrée d'un additionneur 91 effectuant la somme des moitiés des valeurs présentes à ces entrées. La sortie de l'additionneur 87 est connectée à l'entrée d'un limiteur de dynamique 93. La sortie du limiteur 93 est connectée à l'entrée d'une ligne à retard 92 induisant un retard d'un cycle d'horloge. La sortie de la ligne à retard 92 est connectée à une second entrée de l'additionneur 91, à l'entrée impaire d'un multiplexeur 137 et à l'entrée d'une ligne à retard 135 induisant un retard d'un cycle d'horloge. La sortie de l'additionneur 91 est connectée à l'entrée d'une ligne à retard 138 induisant un retard d'un cycle d'horloge. La sortie de la ligne à retard 138 est connectée à l'entrée 0 d'un multiplexeur 139. La sortie de la ligne à retard 135 est connectée à l'entrée de la ligne à retard 136 induisant un retard d'un cycle d'horloge et à l'entrée 0 du multiplexeur 140. La sortie de la ligne à retard 136 est connectée à l'entrée paire du multiplexeur 137. La sortie du multiplexeur 137 est connectée à l'entrée de l'additionneur 134. La sortie de l'additionneur 134 est connectée à l'entrée 1 du multiplexeur 139. Les sorties des multiplexeurs 139 et 140 sont reliées aux entrées d'un multiplexeur 142 comportant deux entrées et deux sorties. Une première sortie du multiplexeur 142 est reliée à l'entrée d'une ligne à retard 143 induisant un retard d'un cycle d'horloge, une seconde sortie du multiplexeur 142 est reliée à l'entrée d'une ligne à retard 144 induisant un retard d'un cycle d'horloge, les sorties des lignes à retard 143 et 144 constituent la sortie de l'interpolateur du mode 20ms.

Les sorties des multiplexeurs 100 et 101 sont reliées à deux entrées d'un filtre 145. La sortie du multiplexeur 102 est reliée à la troisième entrée du filtre 145, à l'entrée d'une ligne à retard 109 induisant un retard d'un cycle d'horloge et à l'entrée de l'additionneur 104 effectuant la somme des moitiés des valeurs présentes à ces entrées. La sortie du multiplexeur 103 est reliée à la seconde entrée de l'additionneur 104. La sortie du filtre 145 est reliée à l'entrée d'une ligne à retard 105 induisant un retard d'un cycle d'horloge. La sortie de la ligne à retard 105 est reliée à l'entrée moins d'un soustracteur 124 et à l'entrée d'une ligne à retard 106 induisant un retard d'un cycle d'horloge. La sortie de la ligne à retard 106 est reliée à l'entrée d'une ligne à retard 107 induisant un retard d'un cycle d'horloge. La sortie de la ligne à retard 107 est reliée à l'entrée d'une ligne à retard 108 induisant un retard d'un cycle d'horloge. La sortie de la ligne à retard 108 est reliée à une première entrée d'un additionneur 132. La sortie de l'additionneur 104 est reliée à l'entrée d'une ligne à retard 123 induisant un retard d'un cycle d'horloge. La sortie de la ligne à retard 123 est reliée à l'entrée plus du soustracteur 124. La sortie du soustracteur 124 est reliée à l'entrée d'une ligne à retard 125 induisant un retard d'un cycle d'horloge. La sortie de la ligne à retard 125 est reliée à l'entrée d'un multiplieur par deux 128, à l'entrée d'une ligne à retard 126 induisant un retard d'un cycle d'horloge, et à l'entrée d'un additionneur 130 effectuant la somme des quarts de valeurs présentes à ces entrées. La sortie de la ligne à retard 126 est reliée à une première entrée d'un additionneur 127. La sortie du multiplieur 128 est reliée à la seconde entrée de l'additionneur 127. La sortie de l'additionneur 127 est reliée à l'entrée d'une ligne à retard 129 induisant un retard d'un cycle d'horloge. La sortie de la ligne à retard 129 est reliée à la seconde entrée de l'additionneur 130. La sortie de l'additionneur 130 est reliée à l'entrée d'une ligne à retard 131 induisant un retard d'un cycle d'horloge. La sortie de la ligne à retard 131 est reliée à une seconde entrée de l'additionneur 132. La sortie de l'additionneur 132 est reliée à l'entrée d'un limiteur de dynamique 133. La sortie du limiteur 133 est reliée à l'entrée paire d'un multiplexeur 114 et à l'entrée impaire d'un multiplexeur 113. La sortie de la ligne à retard 109 est reliée à l'entrée d'une ligne à retard 110 induisant un retard d'un cycle d'horloge. La sortie de la ligne à retard 110 est reliée à l'entrée d'une ligne à retard 111 induisant un retard d'un cycle d'horloge. La sortie de la ligne à retard 111 est reliée à l'entrée d'une ligne à retard 112 induisant un retard d'un cycle d'horloge ainsi qu'à l'entrée paire du multiplexeur 113. La sortie de la ligne à retard 112 est reliée à l'entrée impaire du multiplexeur 114. La sortie du multiplexeur 114 est reliée à quatre lignes à retard induisant, chacune, un retard d'un cycle d'horloge placées en série et référencées 115,116,117 et 118. La sortie du multiplexeur 113 est connectée à quatre lignes à retard induisant, chacune, un retard d'un cycle d'horloge placées en série référencées 119,120,121 et 122. Les sorties des lignes à retard 118 et 122 constituent la sortie de l'interpolateur du mode 80ms.

Les multiplexeurs 62, 63, 64, 65, 100, 101, 102, 103, 88, 137, 113 et 114 reçoivent un même signal de contrôle du dispositif de contrôle 55 permettant de relier soit l'entrée paire soit l'entrée impaire à la sortie de ces multiplexeurs. Avantageusement, on relie la sortie des multiplexeurs à l'entrée paire pour traiter les trames ayant un numéro pair sur les figures 1 ou 2 et impair pour celles ayant un numéro impair. Le multiplexeur à deux entrées et deux sortie 142 reçoit la même commande. Dans le cas d'une commande impaire il relie la sortie du multiplexeur 139 à l'entrée de la ligne à retard 143 et la sortie du multiplexeur 140 à l'entrée de la ligne à retard 144. Dans le cas d'une commande impaire, le multiplexeur 142 relie la sortie du multiplexeur 139 à l'entrée de la ligne à retard 144 et la sortie du multiplexeur 140 à l'entrée de la ligne à retard 143. Les multiplexeurs 139 et 140 reçoivent le même signal de commande permettant de relier soit l'entrée 0 soit l'entrée 1 à leur sortie.

Les multiplexeurs permettant d'aiguiller les valeurs à traiter aux endroits de leurs traitements.

Les lignes à retard permettant de disposer simultanément de tous les échantillons source permettant de calculer un échantillon interpolé.

Les filtres 30 et 145 sont des filtres dits "médians" qui relient à leur sortie leur entrée sur laquelle est présente la valeur la plus proche la moyenne de ces trois valeurs.

Les limiteurs 93 et 133 permettant par exemple de réduire une dynamique de 10 bits à 8 bits.

Pour mieux comprendre le fonctionnement du dispositif selon la présente invention, on va dans la suite donner un exemple d'un instant et des numéros d'éléments d'images de la figure 2 présente en divers points du circuit selon la présente invention. Dans l'exemple choisi tous les multiplexeurs sont dans la position impaire.

Sur l'entrée 22 nous avons l'élément d'image H24.

Sur l'entrée 21 nous avons l'élément d'image G23. A la sortie de la ligne à retard 56 nous avons l'élément d'image G21.

A la sortie de la ligne à retard 57 nous avons l'élément d'image E23.

A la sortie de la ligne à retard 59 nous avons l'élément d'image E21.

A la sortie de la ligne à retard 60 nous avons l'élément d'image E19.

A la sortie de la ligne à retard 61 nous avons l'élément d'image C21.

A la sortie de la ligne à retard 94 nous avons l'élément d'image H22.

A la sortie de la ligne à retard 95 nous avons l'élément d'image F24.

A la sortie de la ligne à retard 97 nous avons l'élément d'image F22.

A la sortie de la ligne à retard 98 nous avons l'élément d'image F20.

A la sortie de la ligne à retard 99 nous avons l'élément d'image D22.

A la sortie du multiplexeur 62 nous avons l'élément d'image G21. Cet élément d'image n'est pas pertinent pour le filtre 30.

A la sortie du multiplexeur 63 nous avons l'élément d'image C21. Cet élément d'image n'est pas pertinent pour le filtre 30.

A la sortie du multiplexeur 64 nous avons l'élément d'image E19. Cet élément d'image n'est pas pertinent pour le filtre 30.

A la sortie du multiplexeur 100 nous avons l'élément d'image D22.

A la sortie du multiplexeur 101 nous avons l'élément d'image F22.

A la sortie du multiplexeur 102 nous avons l'élément d'image E21.

A la sortie du multiplexeur 103 nous avons l'élément d'image E23.

A la sortie du filtre 30 nous avons une estimation de l'élément d'image E21. Cet élément d'image n'est pas pertinent pour la partie suivante.

A la sortie de la ligne à retard 67 nous avons la valeur estimée de l'élément d'image E19.

A la sortie de la ligne à retard 71 nous avons la valeur estimée de l'élément d'image E11.

A la sortie de la ligne à retard 76 nous avons une autre valeur estimée de l'élément d'image E19.

A la sortie du soustracteur 77 nous avons la différence entre les deux estimations de la valeur d'image E19.

A la sortie de la ligne à retard 86 nous avons l'erreur sur l'élément d'image E11.

A la sortie de l'additionneur 87 nous avons l'élément d'image E11 corrigé.

A la sortie de la ligne à retard 92 nous avons l'élément d'image E9 non pertinent.

A la sortie de la ligne à retard 75 nous avons l'élément d'image E11. Cet élément d'image n'est pas pertinent.

A la sortie de l'additionneur 91 nous avons l'élément d'image E10. Cet élément d'image n'est pas pertinent.

A la sortie du limiteur 93 nous avons la valeur de l'élément d'image E11 sa dynamique a été limitée par exemple à 8 bits.

A la sortie de la ligne à retard 138 nous avons la valeur de l'élément d'image E8. Cette valeur est pertinente et va être choisie par le dispositif de contrôle 55 avec un choix "0" pour les multiplexeurs 139 et 140.

A la sortie de la ligne à retard 143 nous avons l'élément d'image E6 correct.

A la sortie de la ligne à retard 90 nous avons l'élément d'image E7. Cet élément d'image n'est pas pertinent.

A la sortie de la ligne à retard 135 nous avons l'élément d'image E7 correct. Cet élément d'image sera transmis par le multiplexeur 140 de façon à avoir en sortie de la ligne à retard 144 l'élément d'image E5 correct.

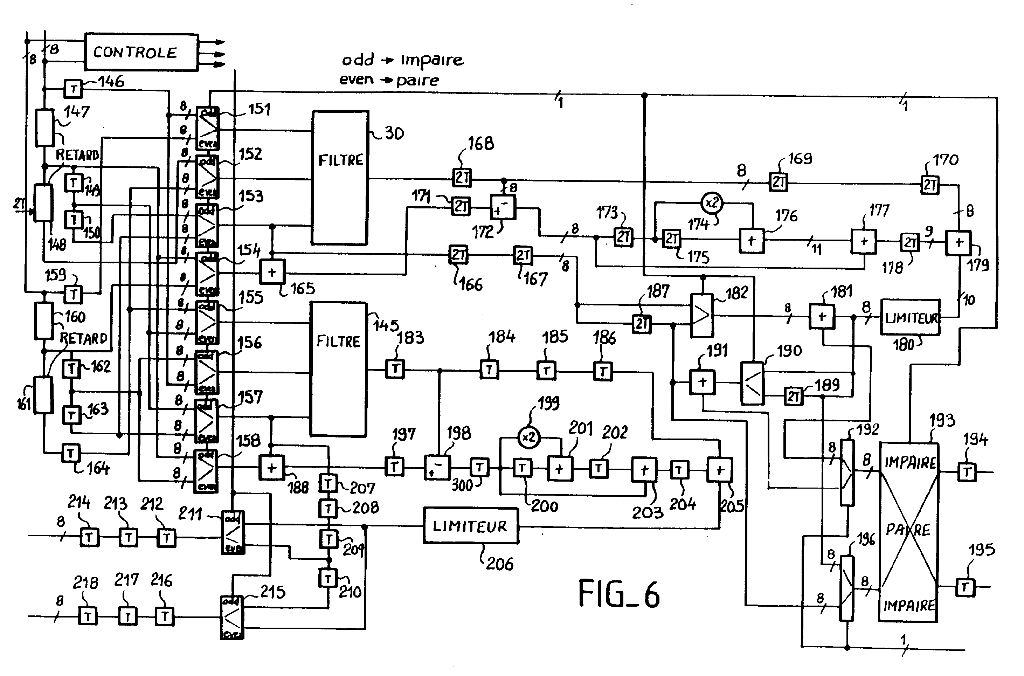

On a vu que dans le cas de l'exemple de réalisation de la figure 5 le dispositif est amené à traiter les éléments d'image non pertinents. Dans l'exemple de réalisation illustré sur la figure 6 on ne fournit pas les éléments non pertinents à l'interpolateur ce qui permet de réduire la cadence de travail d'une partie du circuit et il est possible de remplacer une ligne à retard induisant le retard d'une ligne par une ligne à retard induisant le retard d'une demie-ligne dont l'implémentation nécessite sensiblement la moitié de la surface du semiconducteur.

Le dispositif de la figure 6 comporte deux entrées 21 et 22 connectées notamment au dispositif de contrôle 55. D'autre part l'entrée 21 est connectée l'entrée d'une ligne à retard 146 induisant un retard d'un cycle d'horloge et à l'entrée d'une ligne à retard 147 induisant un retard d'une ligne. l'entrée 22 est connectée à l'entrée d'une ligne à retard 159 induisant un retard d'un cycle d'horloge et à l'entrée d'une ligne à retard 160 induisant le retard d'une ligne. La sortie de la ligne à retard 146 est connectée à l'entrée impaire d'un multiplexeur 151 et à l'entrée paire d'un multiplexeur 156. La sortie de la ligne à retard 147 est connectée à l'entrée d'une ligne à retard 149 induisant un retard d'un cycle d'horloge à l'entrée impaire d'un multiplexeur 154, l'entrée impaire d'un multiplexeur 158 et à l'entrée d'une ligne à retard 148 induisant un retard d'une demie-ligne d'image. La sortie de la ligne à retard 159 est connectée à l'entrée paire du multiplexeur 151. La sortie de la ligne à retard 160 est connectée à l'entrée d'une ligne à retard 162 induisant un retard d'un cycle d'horloge, à l'entrée impaire du multiplexeur 154 et à l'entrée d'une ligne à retard 161 induisant un retard d'une ligne d'image. La sortie de la ligne à retard 162 est connectée à l'entrée de la ligne à retard 163, induisant un retard d'un cycle d'horloge, à l'entrée impaire d'un multiplexeur 156 et à l'entrée paire d'un multiplexeur 153. La sortie de la ligne à retard 163 est connectée à l'entrée paire d'un multiplexeur 157 et à l'entrée impaire d'un multiplexeur 152. La sortie de la ligne à retard 161 est connectée à l'entrée de la ligne à retard 164, induisant un retard d'un cycle d'horloge. La sortie de la ligne à retard 164 est connectée à l'entrée impaire du multiplexeur 155 et à l'entrée paire du multiplexeur 152. La sortie de la ligne à retard 149 est connectée à l'entrée de la ligne à retard 150, induisant un retard d'un cycle d'horloge, à l'entrée paire du multiplexeur 157 et l'entrée impaire du multiplexeur 155. La sortie de la ligne 150 est connectée à l'entrée impaire du multiplexeur 153. La sortie de la ligne à retard 148 est connectée à l'entrée impaire du multiplexeur 152. Les sorties des multiplexeurs 151 et 152 sont connectées aux deux premières entrées d'un filtre 30. La sortie du multiplexeur 153 est connectée à la troisième entrée du filtre 30 et à l'entrée d'un additionneur 165 effectuant la demie-somme des valeursprésentes à ses deux entrées. La sortie du multiplexeur 154 est connectée à la seconde entrée de l'additionneur 165. Les sorties des multiplexeurs 155 et 156 sont connectées aux deux premières entrées du filtre 145. La sortie du multiplexeur 157 est connectée à la troisième entrée du filtre 145 et à une première entrée de l'additionneur 188 effectuant la somme des demies-valeurs présentes à ces deux entrées. La sortie du multiplexeur 158 est connectée à la seconde entrée de l'additionneur 188. La sortie du filtre 30 est connectée à l'entrée de la ligne à retard 168, induisant un retard de deux cycles d'horloge. La sortie de la ligne 168 est connectée à l'entrée de la ligne à retard 169, induisant un retard de deux cycles d'horloge, et à l'entrée moins d'un soustracteur 172. La sortie de la ligne 169 est connectée à l'entrée d'une ligne à retard 170, induisant un retard de deux cycles d'horloge. La sortie de la ligne à retard 170 est connectée à une première entrée d'un additionneur 179. La sortie de l'additionneur 165 est connectée à l'entrée d'une ligne à retard 171, induisant un retard de deux cycles d'horloge. La sortie de la ligne à retard 171 est connectée à l'entrée plus du soustracteur 172. La sortie du soustracteur 172 est connectée à l'entrée d'une ligne à retard 73, induisant un retard de deux cycles d'horloge ainsi qu'à une première entrée d'un additionneur 177. La sortie de la ligne à retard 173 est connectée à l'entrée d'un multiplieur par deux 174 ainsi qu'à l'entrée d'une ligne à retard 175, induisant un retard de deux cycles d'horloge. La sortie de la ligne à retard 175 est connectée à une première entrée d'un additionneur 176. La sortie du multiplieur par deux 174 est connectée à une seconde entrée d'un additionneur 176. La sortie de l'additionneur 176 est connectée à une seconde entrée de l'additionneur 177 effectuant la somme des quarts de valeurs présentes à ces deux entrées. La sortie de l'additionneur 177 est connectée à l'entrée d'une ligne à retard 178, induisant un retard de deux cycles d'horloge. La sortie de la ligne à retard 178 est connectée à une seconde entrée de l'additionneur 179. La sortie de la ligne à retard 166 est connectée à l'entrée d une ligne à retard 167, induisant un retard de deux cycles d'horloge. La sortie de la ligne à retard 167 est connectée d'une part à l'entrée impaire d'un multiplexeur 182 et d'autre part à l'entrée d'une ligne à retard 187, induisant un retard de deux cycles d'horloge. La sortie de la ligne à retard 187 et connectée à l'entrée paire du multiplexeur 182, à une première entrée d'un additionneur 191 effectuant la somme de demie-valeurs présentes à ces deux entrées et à l'entrée 1 du multiplexeur 196. La sortie du multiplexeur 182 est connectée à une première entrée d'un additionneur 181 effectuant la somme des demie-valeurs présentes à ces deux entrées. La sortie de l'additionneur 179 est connectée à l'entrée du limiteur 180. La sortie du limiteur 180 est connectée à une seconde entrée de l'additionneur 181, à l'entrée impaire d'un multiplexeur 190, à l'entrée d'une ligne à retard 189, induisant un retard de deux cycles d'horloge, et à l'entrée 0 du multiplexeur 196. La sortie de la ligne à retard 189 est connectée à l'entrée paire du multiplexeur 190. La sortie du multiplexeur 190 est connectée à la seconde entrée de l'additionneur 191. La sortie de l'additionneur 191 est connectée à l'entrée 1 du multiplexeur 192. La sortie de l'additionneur 181 est connectée à l'entrée 0 du multiplexeur 192. Les sorties des multiplexeurs 192 et 196 sont connectées aux deux entrées d'un multiplexeur 193, à deux entrées et deux sorties. Une première sortie du multiplexeur 193 est connectée à l'entrée d'une ligne à retard 194, induisant un retard d'un cycle d'horloge. La sortie de la ligne à retard 194 constitue une des sorties de l'interpolateur 20ms. La seconde sortie du multiplexeur 193 est connectée à l'entrée d'une ligne à retard 195, induisant un retard d'un cycle d'horloge. La sortie de la ligne à retard 195 constitue la seconde sortie de l'interpolateur 20ms.

La sortie des multiplexeurs 155 et 156 sont connectées aux deux premières entrées d'un filtre 145. La sortie du multiplexeur 157 est connectée à la troisième entrée du filtre 145, à l'entrée d'un additionneur 188 effectuant la somme des demie-valeurs présentes à ces deux entrées et à l'entrée d'une ligne à retard 207, induisant un retard d'un cycle d'horloge. La sortie de la ligne à retard 207 est connectée à l'entrée d'une ligne à retard 208, induisant un retard d'un cycle d'horloge. La sortie de la ligne à retard 208 est connectée à l'entrée d'une ligne à retard 209 induisant un retard d'un cycle d'horloge. La sortie de la ligne à retard 209 est connectée à l'entrée paire d'un multiplexeur 211 et à l'entrée d'une ligne à retard 210 induisant un retard d'un cycle d'horloge. La sortie de la ligne à retard 210 est connectée à l'entrée impaire d'un multiplexeur 215. La sortie du multiplexeur 158 est connectée à la seconde entrée de l'additionneur 188. La sortie du filtre 145 est connectée à l'entrée d'une ligne à retard 183, induisant un retard d'un cycle d'horloge. La sortie de la ligne à retard 183 est connectée à l'entrée moins d'un soustracteur 198 et à l'entrée d'une ligne à retard 184 induisant un retard d'un cycle d'horloge. La sortie de la ligne à retard 184 est connectée à l'entrée d'une ligne à retard 185, induisant un retard d'un cycle d'horloge. La sortie de la ligne à retard 185 est connectée à l'entrée d'une ligne à retard 186, induisant un retard d'un cycle d'horloge. La sortie de la ligne à retard 186 est connectée à une des entrées d'un additionneur 205. La sortie de l'additionneur 188 est connectée à l'entrée d'une ligne à retard 197, induisant un retard d'un cycle d'horloge. La sortie de la ligne à retard 197 est connectée à l'entrée plus du soustracteur 198. La sortie du soustracteur 198 est connectée à l'entrée d'une ligne à retard 300, induisant un retard d'un cycle d'horloge. La sortie de la ligne à retard 300 est connectée à l'entrée d'un multiplieur par deux 199, à une première entrée d'un additionneur 203 effectuant la somme des quarts des valeurs présentes à ces deux entrées et à l'entrée d'une ligne à retard 200, induisant un retard d'un cycle d'horloge. La sortie de la ligne à retard 200 est connectée à une première entrée d'un additionneur 201. La sortie du multiplieur par deux 199 est connectée à une seconde entrée de l'additionneur 201. La sortie de l'additionneur 201 est connectée à l'entrée d'une ligne à retard 202, induisant un retard d'un cycle d'horloge. La sortie de la ligne à retard 202 est connectée à une seconde entrée de l'additionneur 203. La sortie de l'additionneur 203 est connectée à l'entrée d'une ligne à retard 204, induisant un retard d'un cycle d'horloge. La sortie de la ligne à retard 204 est connectée à la seconde entrée de l'additionneur 205. La sortie de l'additionneur 205 est connectée à l'entrée d'un limiteur de dynamique 206. La sortie du limiteur 206 est connectée à l'entrée paire du multiplexeur 215 et à l'entrée impaire du multiplexeur 211. La sortie du multiplexeur 211 est connectée à l'entrée d'une ligne à retard 212, induisant un retard d'un cycle d'horloge. La sortie de la ligne à retard 212 est connectée à l'entrée d'une ligne à retard 213, induisant un retard d'un cycle d'horloge. La sortie de la ligne à retard 213 est connectée à l'entrée de la ligne à retard 214, induisant un retard d'une ligne d'horloge. La sortie du multiplexeur 215 est reliée à l'entrée d'une ligne à retard 216, induisant un retard d'un cycle d'horloge. La sortie de la ligne à retard 216 est reliée à l'entrée d'une ligne à retard 217 induisant un retard d'un cycle d'horloge. La sortie de la ligne à retard 217 est reliée à l'entrée d'une ligne à retard 218 induisant un retard d'un cycle d'horloge. Les sorties des lignes à retard 214 et 218 constituent les sorties de l'interpolateur du mode 80ms.

La ligne à retard 148 reçoit une impulsion tous les deux cycles d'horloge. Le dispositif de la figure 6 comporte les éléments travaillant à diverses fréquences d'horloge. Dans l'exemple de réalisation les lignes à retard 168 et 171 et 166 d'une part, et les multiplexeurs 192 et 196 d'autre part constituent les limites de la partie du circuit travaillant, par exemple à 13,5 MHz. Le reste des circuits travaillent par exemple à 27 MHz. La diminution de la fréquence de fonctionnement d'une partie du circuit permet d'en abaisser le coût.

Les éléments de correction compris entre les sorties de soustracteur 172 respectivement 198 et les additionneurs 179 respectivement 205 ont été déterminés par simulation sur ordinateur.

Nous allons donner dans la suite de l'exemple un instant donné de la présence des signaux correspondants à diners éléments d'image :

A l'entrée 22 nous avons l'élément d'image H24 aussi bien pour les trames paires et impaires.

A l'entrée 21 nous avons un élément d'image G23 pour les trames paires et pour les trames impaires.

A la sortie de la ligne à retard 146 nous avons l'élément d'image G21.

A la sortie de la ligne à retard 147 nous avons l'élément d'image E23.

A la sortie de la ligne à retard 149 nous avons l'élément d'image E21.

A la sortie de la ligne à retard 150 nous avons l'élément d'image E19.

A la sortie de la ligne à retard 148 nous avons l'élément d'image C23.

A la sortie de la ligne à retard 159 nous avons l'élément d'image H22.

A la sortie de la ligne à retard 160 nous avons l'élément d'image F24.

A la sortie de la ligne à retard 161 nous avons l'élément d'image D24.

A la sortie de la ligne à retard 162 nous avons l'élément d'image F22.

A la sortie de la ligne à retard 163 nous avons l'élément d'image F20.

A la sortie de la ligne à retard 164 nous avons l'élément d'image D22.

A la sortie du multiplexeur 151 nous avons l'élément d'image G21 pour les trames d'images impaires, l'élément d'image H22 pour les trames d'images paires.

A la sortie du multiplexeur 152 nous avons l'élément d'image C23 pour les trames d'images impaires, l'élément d'image D22 pour les trames d'images paires.

A la sortie du multiplexeur 153 nous avons l'élément d'image E19 pour les trames d'images impaires, l'élément d'image F20 pour les trames d'images paires.

A la sortie du multiplexeur 154 nous avons l'élément d'image E23 pour les trames d'images impaires et l'élément d'image F24 pour les trames d'images paires.

A la sortie du multiplexeur 155 nous avons l'élément d'image E21 pour les trames d'images paires et D22 pour les trames d'images impaires.

A la sortie du multiplexeur 156 nous avons l'élément d'image G21 pour les trames d'images paires et F22 pour les trames d'images impaires.

A la sortie du multiplexeur 157 nous avons l'élément d'image F20 pour les trames d'images paires et E21 pour les trames d'images impaires.

A la sortie du multiplexeur 158 nous avons l'élément d'image F22 pour les trames d'images paires et E23 pour les trames d'images impaires.

A la sortie du filtre 30 nous avons la valeur estimée de l'élément d'image F22 pour les trames d'images paires.

A la sortie de la ligne à retard 168 nous avons la valeur de l'image estimée par le filtre 30 d'élément d'image E19 pour les trames impaires et la valeur estimée de l'élément d'image F20 pour les trames paires.

A la sortie de la ligne à retard 166 nous avons l'élément d'image E17 pour les trames impaires et F18 pour les trames paires. A la sortie de la ligne à retard 167 nous avons la valeur de l'élément d'image F14, pour les trames d'images paires et la valeur E13 pour les trames d'images impaires.

A la sortie de la ligne à retard 187 nous avons la valeur d'élément d'image E9 pour les trames d'images impaires et F10 pour les trames d'images paires.

A la sortie du multiplexeur 182 nous avons la valeur de l'élément d'image F10 pour les trames d'images paires et E13 pour les trames d'images impaires.

A la sortie de la ligne à retard 171 nous avons la valeur estimée de l'élément d'image E19 pour les trames d'images impaires.

A la sortie de l'additionneur 179 nous avons la valeur de l'élément d'image F12 pour les trames d'images paires et la valeur d'élément d'image E11 pour les trames d'images impaires.

A la sortie du limiteur 180 nous avons ces mêmes valeurs F12 et E11 limitées en dynamique, par exemple à 8 bits.

A la sortie de l'additionneur 181 nous avons la valeur de l'élément d'image E12 pour les trames d'images impaires et la valeur d'élément d'image F11 pour les trames d'images paires.

A la sortie de l'additionneur 191 nous avons les valeurs des éléments d'image F9 pour les trames d'images paires et E10 pour les trames d'images impaires.

A la sortie du multiplexeur 192 nous avons la valeur de l'élément d'image E10 pour les trames d'images impaires et la valeur de l'élément d'image F9 pour les trames d'images paires.

A la sortie du multiplexeur 196 nous avons la valeur de l'élément d'image E9 pour les trames d'images impaires et F10 pour les trames d'images paires.

A la sortie de la ligne à retard 194 nous avons la valeur d'élément d'image F8 pour les trames d'images paires et la valeur de l'élément d'images E8 pour les trames d'images impaires.

A la sortie de la ligne à retard 195 nous avons la valeur de l'élément d'image F7 pour les trames d'images paires et E7 pour les trames d'images impaires.

La présente invention permet de réduire la quantité de composants nécessaires à la réalisation d'un récepteur de télévision en haute définition. Ainsi l'interpolateur peut être réalisé sous forme de un ou plusieurs circuits intégrés. l'intégration de ces interpolateurs permet d'augmenter la fiabilité, de diminuer le coût, la taille et le poids d'un récepteur de télévision. Dans le récepteur de télévision selon la présente invention, les interpolateurs 18 et 19 de la figure 4 comportent des parties communes. L'interpolateur 220 correspond au dispositif des figures 5 ou 6.

La présente invention s'applique notamment à la réalisation de téléviseurs à haute définition.

La présente invention s'applique principalement à la réalisation d'un récepteur de télévision destiné à la norme de transmission HD-MAC.

## Revendications

1. Interpolateur (220) d'éléments d'images de télévision comportant des moyens (18) d'interpolation de blocs d'éléments d'images statiques comportant au moins un filtre médian (145) recevant trois blocs d'éléments d'images retardés les uns par rapport aux autres et un additionneur (104) additionnant l'un des blocs d'éléments d'images entré sur le filtre à un quatrième bloc d'éléments d'images et des moyens (19) d'interpolation de blocs d'éléments d'images en mouvement comportant au moins un filtre médian (30) recevant trois blocs d'éléments d'images retardés les uns par rapport aux autres et un additionneur (66) additionnant l'un des blocs d'éléments d'images entré sur le filtre à un quatrième bloc d'éléments d'images, caractérisé en ce que les quatre éléments d'images envoyés respectivement sur chaque filtre médian (30, 145) et chaque additionneur (66, 104) sont issus de quatre multiplexeurs (62, 63, 64, 65 et 100, 101, 102, (103, 104), les entrées impaires des quatre multiplexeurs (62, 63, 64, 65) du moyen d'interpolation (19) en mouvement reçevant les trames impaires des images de télévision et étant connectées à un premier circuit à retard (56 à 61) relié à une première entrée (21) de blocs d'éléments d'images et délivrant cinq sorties retardées de manière spécifique et les entrée paires des quatre mulitplexeurs (62, 63, 64, 65) du moyen d'interpolation (19) en mouvement reçevant les trames paires des images de télévision et étant connectées à un second circuit à retard (94 à 99) relié à une seconde entrée (22) de blocs d'éléments d'images et délivrant cinq sorties retardées de manière spécifique, les entrées impaires des deux premier multiplexeurs (100, 101) du moyen (18) d'interpolation statique étant connectées au deuxième circuit à retard (94 à 99) tandis que leurs entrées paires sont connectées au premier circuit à retard (56 à 51) et les entrées impaires des deux second multiplexeurs (102, 103) du moyen (18) d'interpolation statique étant connectées au premier circuit à retard (56 à 51) tandis que leurs entrées paires sont connectées au second circuit à retard (94 à 99).

2. Interpolateur selon la revendication 1, caractérisé en ce que le premier et le second circuits à retard sont identiques.

3. Interpolateur selon la revendication 2, caractérisé en ce que le circuit à retard est constitué par une première ligne à retard (57 ou 95) introduisant un retard d'une ligne d'image connectée en série à une seconde ligne à retard (58 ou 96) introduisant un retard d'une ligne d'image, I'entrée de la première ligne (57 ou 95) étant connectée à l'entrée du circuit à retard (21 ou 22) et à une troisième ligne à retard (56 ou 94) donnant un retard correspondant à deux éléments d'images, le point milieu entre les première et deuxième lignes à retard étant connecté à une quatrième et cinquième lignes à retard (59, 60 ou 97, 98) donnant un retard correspondant à deux éléments d'images et la sortie de la deuxième ligne à retard étant connectée à une sixième ligne à retard (61 ou 99) donnant un retard correspondant à deux éléments d'images, les sorties du circuit à retard étant constituées par les sorties des troisième, quatrième, cinquième et sixième lignes à retard et par le point milieu entre les première et seconde lignes à retard.

4. Interpolateur selon la revendication 3, caractérisé en ce que le premier circuit à retard comporte une deuxième ligne à retard (148) introduisant un retard d'une demie-ligne d'image.

5. Interpolateur selon la revendication 4, caractérisé en ce que la ligne à retard (148) d'une capacité d'une demie-ligne d'image fonctionne à une fréquence moitié des lignes à retard d'une capacité d'une ligne d'image (147, 160, 161) de façon à ce que lesdites lignes à retard induisent un retard d'une ligne d'image.

6. Récepteur de télévision du type comportant au moins un décodeur (3), un circuit de débrassage (4), un convertisseur de structure de sous-échantillonnage (6) et un circuit d'interpolation permettant de traiter des blocs d'éléments d'images statiques et des blocs d'éléments d'images en mouvement, caractérisé en ce que le circuit d'interpolation comporte au moins un interpolateur selon l'une quelconque des revendications 1 à 5.

7. Récepteur de télévision selon la revendication 6, caractérisé par le fait qu'il traite un standard de télévision transmettant séparément les signaux de chrominance et les signaux de luminance.

8. Récepteur de télévision selon les revendications 6 et 7, caractérisé par le fait qu'il traite un standard de télévision qui découpe l'image en blocs d'éléments d'images statiques, blocs dont les éléments d'images sont en mouvement lent et blocs dont les éléments d'images sont en mouvement rapide.

9. Récepteur de télévision selon la revendication 8, caractérisé par le fait que les blocs ont une dimension de 16 éléments d'images par 16 éléments d'images.

## Patentansprüche

1. Interpolator (220) für Fernsehbildelemente mit Mitteln (18) zur Interpolation von Blöcken von statischen Bildelementen, die wenigstens ein Medianfilter (145), das drei Blöcke von untereinander verzögerten Bildelementen empfängt, und einen Addierer (104) enthalten, der einen der Blöcke von Bildelementen, der dem Filter eingegeben wurde, zu einem vierten Block von Bildelementen hinzuaddiert, und mit Mitteln (19) zur Interpolation von Blöcken von bewegten Bildelementen, die wenigstens ein Medianfilter (30), das drei Blöcke von untereinander verzögerten Bildelementen empfängt, und einen Addierer (66) enthalten, der einen der Blöcke von Bildelementen, der dem Filter eingegeben wurde, zu einem vierten Block von Bildelementen hinzuaddiert, dadurch gekennzeichnet, daß die vier Bildelemente, die an jedes Medianfilter (30, 145) bzw. jeden Addierer (66, 104) gesandt werden, von vier Multiplexern (62, 63, 64, 65 und 100, 101, 102, 103, 104) geliefert werden, wobei die ungeradzahligen Eingänge der vier Multiplexer (62, 63, 64, 65) des Bewegungsinterpolationsmittels (19) die ungeradzahligen Teilbilder der Fernsehbilder empfangen und an einen ersten Verzögerungskreis (56 bis 61) angeschlossen sind, der mit einem ersten Eingang (21) für Blöcke von Bildelementen verbunden ist und fünf auf spezifische Weise verzögerte Ausgangssignale liefert, und die geradzahligen Eingänge der vier Multiplexer (62, 63, 64, 65) des Bewegungsinterpolationsmittels (19) die geradzahligen Teilbilder der Fernsehbilder empfangen und an einen zweiten Verzögerungskreis (94-99) angeschlossen sind, der mit einem zweiten Eingang (22) für Blöcke von Bildelementen verbunden ist und fünf auf spezifische Weise verzögerte Ausgangssignale liefert, wobei die ungeradzahligen Eingänge der beiden ersten Multiplexer (100, 101) des statischen Interpolationsmittels (18) an den zweiten Verzögerungskreis (94 bis 99) angeschlossen sind, während ihre geradzahligen Eingänge an den ersten Verzögerungskreis (56 bis 51) angeschlossen sind, und wobei die ungeradzahligen Eingänge der beiden zweiten Multiplexer (102, 103) des statischen Interpolationsmittels (18) an den ersten Verzögerungskreis (56 bis 51) angeschlossen sind, während ihre geradzahligen Eingänge an den zweiten Verzögerungskreis (94 bis 99) angeschlossen sind.

2. Interpolator nach Anspruch 1, dadurch gekennzeichnet, daß der erste und der zweite Verzögerungskreis übereinstimmen.

3. Interpolator nach Anspruch 2, dadurch gekennzeichnet, daß der Verzögerungskreis durch eine erste Verzögerungsleitung (57 oder 95) gebildet ist, die eine Verzögerung einer Bildzeile einführt und mit einer zweiten Verzögerungsleitung (58 oder 96) in Reihe geschaltet ist, die eine Verzögerung einer Bildzeile einführt, wobei der Eingang der ersten Leitung (57 oder 95) an den Eingang des Verzögerungskreises (21 oder 22) und an eine dritte Verzögerungsleitung (56 oder 94) angeschlossen ist, die eine Verzögerung liefert, die zwei Bildelementen entspricht, der Mittelpunkt zwischen der ersten und der zweiten Verzögerungsleitung an eine vierte und eine fünfte Verzögerungsleitung (59, 60 oder 97, 98) angeschlossen ist, die eine Verzögerung liefert, die zwei Bildelementen entspricht, und wobei der Ausgang der zweiten Verzögerungsleitung an eine sechste Verzögerungsleitung (61 oder 99) angeschlossen ist, die eine Verzögerung liefert, die zwei Bildelementen entspricht, wobei die Ausgänge des Verzögerungskreises durch die Ausgänge der dritten, vierten, fünften und sechsten Verzögerungsleitung und durch den Mittelpunkt zwischen der ersten und der zweiten Verzögerungsleitung gebildet sind.

4. Interpolator nach Anspruch 3, dadurch gekennzeichnet, daß der erste Verzögerungskreis eine zweite Verzögerungsleitung (148) enthält, die eine Verzögerung einer Halbzeile eines Bildes einführt.

5. Interpolator nach Anspruch 4, dadurch gekennzeichnet, daß die Verzögerungsleitung (148) von einer Kapazität einer Halbzeile eines Bildes bei einer halben Frequenz der Verzögerungsleitungen von einer Kapazität einer Bildzeile (147, 160, 161) arbeitet, derart, daß die Verzögerungsleitungen eine Verzögerung einer Bildzeile einführen.

6. Fernsehempfänger von der Art mit wenigstens einem Decoder (3), einer Entmischungsschaltung (4), einem Unterabtastungsstrukturwandler (6) und einem Interpolationskreis, durch den Blöcke von statischen Bildelementen und Blöcke von bewegten Bildelementen verarbeitet werden können, dadurch gekennzeichnet, daß der Interpolationskreis wenigstens einen Interpolator gemäß einem der Ansprüche 1-5 enthält.

7. Fernsehempfänger nach Anspruch 6, dadurch gekennzeichnet, daß er eine Fernsehnorm verarbeitet, die die Chrominanzsignale und die Luminanzsignale getrennt aussendet.

8. Fernsehempfänger nach den Ansprüchen 6 und 7, dadurch gekennzeichnet, daß er eine Fernsehnorm verarbeitet, die das Bild in Blöcke von statischen Bildelementen, Blöcke, deren Bildelemente sich langsam bewegen, und Blöcke zerschneidet, deren Bildelemente sich schnell bewegen.

9. Fernsehempfänger nach Anspruch 8, dadurch gekennzeichnet, daß die Blöcke eine Größe von 16 Bildelementen zu 16 Bildelementen besitzen.

## Claims

1. Interpolator (220) of television picture elements including means (18) for interpolating static picture element blocks including at least one median filter (145) receiving three picture element blocks delayed with respect to each other and an adder (104) adding one of the picture element blocks entered into the filter to a fourth picture element block and means (19) of interpolating moving picture element blocks including at least one median filter (30) receiving three image element blocks delayed with respect to each other and an adder (66) adding one of the picture element blocks entered into the filter to a fourth picture element block, characterized in that the four picture elements sent to each median filter (30, 145) and each adder (66, 104) respectively arise from four multiplexers (62, 63, 64, 65 and 100, 101, 102, 103, 104), the odd inputs of the four multiplexers (62, 63, 64, 65) of the moving interpolation means (19) receiving the odd frames of the television pictures and being connected to a first delay circuit (56 to 61) linked to a first input (21) of picture element blocks and delivering five outputs delayed in a specific manner and the even inputs of the four multiplexers (62, 63, 64, 65) of the moving interpolation means (19) receiving the even frames of the television pictures and being connected to a second delay circuit (94 to 99) linked to a second input (22) of picture element blocks and delivering five outputs delayed in a specific manner, the odd inputs of the first two multiplexers (100, 101) of the static interpolation means (18) being connected to the second delay circuit (94 to 99) whilst their even inputs are connected to the first delay circuit (56 to 51) and the odd inputs of the second two multiplexers (102, 103) of the static interpolation means (18) being connected to the first delay circuit (56 to 51) whilst their even inputs are connected to the second delay circuit (94 to 99).

2. Interpolator according to Claim 1, characterized in that the first and second delay circuits are identical.

3. Interpolator according to Claim 2, characterized in that the delay circuit consists of a first delay line (57 or 95) introducing a delay of one picture line connected in series to a second.delay line (58 or 96) introducing a delay of one picture line, the input of the first line (57 or 95) being connected to the input of the delay circuit (21 or 22) and to a third delay line (56 or 94) giving a delay corresponding to two picture elements, the mid-point between the first and second delay lines being connected to a fourth and fifth delay line (59, 60 or 97, 98) giving a delay corresponding to two picture elements and the output of the second delay line being connected to a sixth delay line (61 or 99) giving a delay corresponding to two picture elements, the outputs of the delay circuit consisting of the outputs of the third, fourth, fifth and sixth delay lines and of the mid-point between the first and second delay lines.

4. Interpolator according to Claim 3, characterized in that the first delay circuit includes a second delay line (148) introducing a delay of half a picture line.

5. Interpolator according to Claim 4, characterized in that the delay line (148) with a capacity of half a picture line operates at half the frequency of the delay lines with a capacity of one picture line (147, 160, 161) so that the said delay lines induce a delay of one picture line.

6. Television receiver of the type including at least one decoder (3), a deshuffling circuit (4), a sub-sampling structure converter (6) and an interpolation circuit allowing the processing of static picture element blocks and of moving picture element blocks, characterized in that the interpolation circuit includes at least one interpolator according to any one of Claims 1 to 5.

7. Television receiver according to Claim 6, characterized in that it handles a television standard which transmits the chrominance signals and luminance signals separately.

8. Television receiver according to Claims 6 and 7, characterized in that it handles a television standard which partitions the picture into static picture element blocks, blocks whose picture elements are slow-moving and blocks whose picture elements are fast-moving.

9. Television receiver according to Claim 8, characterized in that the blocks have a dimension of 16 picture elements by 16 picture elements.
